# EUROPÄISCHE PATENTSCHRIFT

(11) **EP 4 042 561 B1**
(45) Veröffentlichungstag und Bekanntmachung des Hinweises auf die Patenterteilung: **06.11.2024**
(21) Anmeldenummer: 20776197.4
(22) Anmeldetag: 30.09.2020
(51) Int. Cl.: H02P 25/10, H02P 7/29, H02P 7/00

(54) **VERFAHREN ZUR ANSTEUERUNG EINES EINEN MECHANISCHEN KOMMUTATOR AUFWEISENDEN ELEKTROMOTORS**
METHOD FOR CONTROLLING AN ELECTRIC MOTOR HAVING A MECHANICAL COMMUTATOR
PROCÉDÉ DE COMMANDE D'UN MOTEUR ÉLECTRIQUE COMPORTANT UN COMMUTATEUR MÉCANIQUE

(30) Priorität: 08.10.2019 EP 19201948
(43) Veröffentlichungstag der Anmeldung: 17.08.2022
(73) Patentinhaber: Elmos Semiconductor SE, 44227 Dortmund (DE)
(72) Erfinder: HARTZSCH, Jörg, 44287 Dortmund (DE)
(74) Vertreter: dompatent von Kreisler Selting Werner - Partnerschaft von Patent- und Rechtsanwälten mbB
(86) Internationale Anmeldenummer: PCT/EP2020/077290
(87) Internationale Veröffentlichungsnummer: WO 2021/069269

(56) Entgegenhaltungen:
- DE-A1- 102008 018 818
- DE-A1- 102010 017 835
- DE-A1- 102016 101 905

## Beschreibung

Die Erfindung betrifft ein Verfahren zur Ansteuerung eines einen mechanischen Kommutator aufweisenden Elektromotors.

Elektromotoren (für Gleichstrom und für Wechselstrom) weisen einen Kommutator auf, der entweder mechanisch ausgeführt ist und damit Bürsten aufweist oder aber elektronisch realisiert wird, womit der Elektromotor bürstenlos ist. Bei bürstenbehafteten und damit mechanischen Kommutatoren kommt es zur Funkenbildung an den Bürsten, weshalb diese im Laufe der Zeit durch Erosion verschleißen. Außerdem erzeugt das sogenannte "Bürstenfeuer" Geräusche und unerwünschte elektromagnetische Abstrahlungen.

Aus DE-A-10 2010 017 835 sind ein Verfahren zur Verarbeitung einer Motorgröße eines Gleichstrommotors (nämlich der Rippel des Ankerstromsignals) eines Kraftfahrzeugstellantriebs sowie eine Stelleinrichtung hierfür bekannt. Bei diesem bekannten Verfahren und bei dieser bekannten Einrichtung soll dafür gesorgt werden, dass betriebsbedingte Versorgungsspannungsschwankungen ausgeglichen werden. Dazu wird der Gleichstrommotor mittels eines PWM-Signals angesteuert und dessen Tastgrad t_{on/}T_{PWM} in Abhängigkeit von den Spannungsschwankungen der Batteriespannung eingestellt, d.h. den sogenannten duty factor (Tastgrad) oder duty cycle (Tastverhältnis) verändert.

In DE-A-10 2008 018 818 ist ein elektrisches Motoransteuerungsverfahren mit Lastmomentanpassung beschrieben, während DE-A-10 2016 101 905 ein Verfahren zur Ansteuerung eines Elektromotors für ein Verstellelement eines Kraftfahrzeugs offenbart.

Aufgabe der Erfindung ist es, ein Verfahren zur Ansteuerung eines einen mechanischen Kommutator aufweisenden Elektromotors anzugeben, dessen Bürsten weniger stark verschleißen.

Zur Lösung dieser Aufgabe wird mit der Erfindung ein Verfahren zur Ansteuerung eines einen mechanischen Kommutator aufweisenden Elektromotors vorgeschlagen, wobei bei dem Verfahren
- mittels eines Sensors oder sensorlos diejenigen Zeitpunkte ermittelt werden, zu denen eine Kommutierung erfolgt,
- der Elektromotor mittels eines eine Folge von Pulsen aufweisenden Versorgungsspannungssignals angesteuert wird und
- das Versorgungsspannungssignal zur Reduktion seiner Größe zu den Kommutierungszeitpunkten mittels eines Modulationssignals moduliert wird, welches derart in Phase mit den Kommutierungszeitpunkten liegt, dass die Minima des Modulationssignals zeitlich mit den Kommutierungszeitpunkten zusammenfallen.

Der erfindungsgemäße Elektromotor mit mechanischem Kommutator wird mittels eines Versorgungsspannungssignals angesteuert, das eine Folge von Pulsen aufweist. Bei diesem Signal handelt es sich typischerweise um ein pulsweitenmoduliertes oder um ein pulsdichtemoduliertes Signal. Dieses Versorgungsspannungssignal wird nun erfindungsgemäß mittels eines Modulationssignals noch zusätzlich dergestalt moduliert, dass die effektive Größe der Versorgungsspannung zu den Kommutierungszeitpunkten reduziert ist und zwar im Wesentlichen auf Null Volt reduziert ist (zur Bedeutung von "im Wesentlichen Null Volt" siehe weiter unten). Damit kann die Funkenbildung, die Geräuschentwicklung und die elektromagnetische Abstrahlung zu den Kommentierungszeitpunkten reduziert werden. Somit reduziert sich u.a. die Gefahr des Verschleißes der Bürsten infolge von Funkenerosion.

Neben den beiden zuvor genannten Modulationsverfahren eignen sich auch eine Puls-Amplituden-Modulation (PMA), Puls-Frequenz-Modulation (PFM), Puls-Weiten-Modulation (PWM), Puls-Pausen-Modulation (PPM), Puls-Phasen-Modulation (PPM) und Puls-Position-Modulation (PPM), wie beispielsweise beim Manchester Code.

Für das erfindungsgemäße Verfahren bedarf es der Kenntnis der Kommutierungszeitpunkte. Dies kann durch im Stand der Technik grundsätzlich bekannte Verfahren mittels eines Sensors oder aber auch sensorlos erfolgen. Als Sensor eignet sich vorteilhafterweise ein Hall Sensor. Beispiele für die sensorlose Ermittlung der Kommutierungszeitpunkte anhand der Detektion von Stromrippeln im Ankerstromsignal sind in DE 42 17 265 C2 und DE 195 11 307 C1 beschrieben.

Wie bereits oben erwähnt, wird die Versorgungsspannung für den Elektromotor mittels eines beispielsweise pulsweitenmodulierten oder pulsdichtemodulierten Versorgungsspannungssignals bereitgestellt. Damit nun dieses Pulse aufweisenden Versorgungsspannungssignal zu einer reduzierten Versorgungsspannung zu den Kommutierungszeitpunkten führt, wird mittels des Modulationssignals die Pulsweite bzw. die Pulsdichte moduliert, so dass sich idealerweise zu den Kommutierungszeitpunkten eine Versorgungsspannung von im Wesentlichen Null Volt ergibt. Mit "im Wesentlichen Null Volt" ist dabei eine Größe der Versorgungsspannung gemeint, die z.B. kleiner als 20% oder kleiner als 15% oder kleiner als 10% oder kleiner als 5% der Nenn-Versorgungsspannung ist. Trotz dieser Reduktion der Größe der Versorgungsspannung zu den Kommutierungszeitpunkten sollte aber die mittlere Größe der Versorgungsspannung weiterhin auf dem Pegel bleiben, der für den aktuellen Betrieb des Elektromotors erforderlich ist. Bei einem Gleichstrommotor als Elektromotor bedeutet dies, dass durch das Modulationssignal und die sich daraus ergebende zusätzliche Modulation des die Pulse aufweisenden Versorgungsspannungssignals dessen Gleichspannungsanteil unverändert bleibt, was in diesem Fall vorteilhafterweise dadurch realisiert wird, dass das Modulationssignal ein Wechselsignal, beispielsweise ein Sinussignal ist. Die Phasenlage des Modulationssignals wird so gewählt, dass das Modulationssignal zu den Kommutierungszeitpunkten einen Minimalwert annimmt.

Bei dem erfindungsgemäßen Verfahren ist es von Vorteil, wenn bei der sensorlosen Kommutierungszeitpunktdetektion zumindest minimale Rippel im Ankerstromsignal erscheinen. Dies muss aber nicht zwingend dauerhaft der Fall sein. Es ist nämlich auch möglich, dass die Rippel zumindest zeitweise gänzlich verschwinden, da die Regelung nur in den seltensten Fällen derart ausgestaltet sein wird, dass man dauerhaft "ideal regelt", was dazu führt, dass keine Rippel im Ankerstromsignal mehr auftreten, werden also von Zeit zu Zeit immer wieder einmal Rippel auftauchen. Das aber ist an sich von Vorteil für das erfindungsgemäße Verfahren, wenn die Kommutierungszeitpunktdetektion sensorlos erfolgt. Denn dann kann sich die Regelung immer wieder "aufschalten".

Anders ist die Situation bei der Detektion der Kommutierungszeitpunkte mittels einer entsprechenden Sensorik.

Weitere vorteilhafte Ausgestaltungen der Erfindung sind Gegenstand der Unteransprüche.

Mit der Erfindung ist es möglich, bestehende Elektromotoren, insbesondere DC-Elektromotoren, mit mechanischem Kommutator, durch die erfindungsgemäße Ansteuerung aufzuwerten. Auch lassen sich durch das erfindungsgemäße Ansteuerungsverfahren überall dort kostengünstige Elektromotoren mit mechanischem Kommutator einsetzen, wo bisher aus Gründen von Bürstenverschleiß, störender Geräuschentwicklung und EMV-Störungen bürstenlose Elektromotoren eingesetzt worden sind.

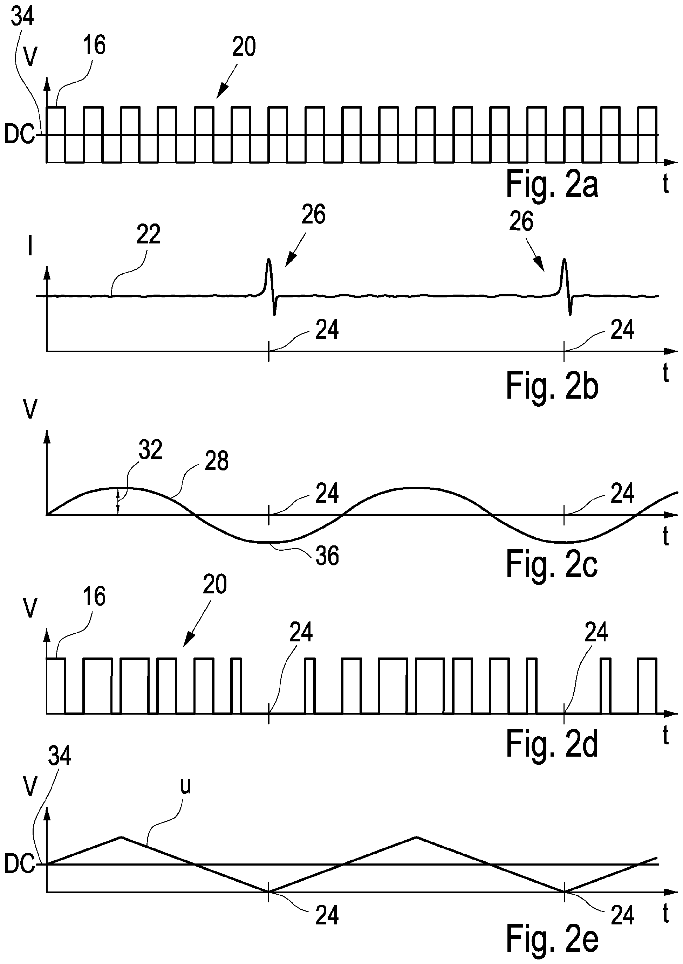

Die Erfindung wird nachfolgend anhand eines Ausführungsbeispiels und unter Bezug auf die Zeichnung näher erläutert. Im Einzelnen zeigen dabei:

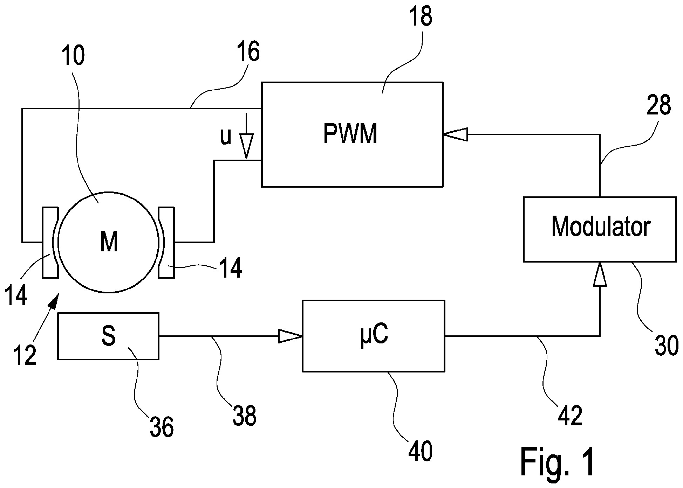

Fig. 1 schematisch als Blockschaltbild die Hauptkomponenten zur erfindungsgemäßen Ansteuerung eines Gleichstrom-Elektromotors,
Fign. 2a bis 2e
   verschiedene Signalverläufe zur Verdeutlichung der erfindungsgemäß modulierten Ansteuerung des Gleichstrom-Elektromotors zur Reduktion des Verschleißes der Bürsten des Elektromotors, hier beispielhaft mit sinusförmigem Verlauf und einer Realisation über die Modulation der Pulsweite (d.h. mittels Pulsweitenmodulation, Fig. 2d), und
Fign. 3a und 3b
   den Verlauf alternativer Modulationssignale.

In Fig. 1 ist ein Blockschaltbild gezeigt, das die Ansteuerung eines DC-Elektromotors 10 zeigt. Der Elektromotor 10 ist mit einem mechanischen Kommutator 12 versehen, der typischerweise zwei Bürsten 14 aufweist, an die die Versorgungsspannung U angelegt wird. Diese Versorgungsspannung U wird mittels eines Pulse aufweisenden Versorgungsspannungssignals 16 bereitgestellt, das in diesem Ausführungsbeispiel von einem PWM-Generator 18 erzeugt wird. Der PWM-Generator 18 erzeugt eine Folge von pulsweitenmodulierten Pulsen, die zu demjenigen Gleichspannungsanteil führen, mit dem der Elektromotor 10 aufgrund der aktuell anstehenden Lastanforderungen angesteuert wird.

Die Pulsfolge des Versorgungsspannungssignals 16 ist beispielhaft in Fig. 2a gezeigt. Die Pulsweite der einzelnen Pulse 20 ist ohne die erfindungsgemäße Maßnahme im Wesentlichen statisch, wenn davon ausgegangen wird, dass sich die Lastanforderungen nicht ändern. In Fig. 2b ist der anzutreffende Ankerstromverlauf 22 in einem exemplarischen Verlauf gezeigt, wie er sich einstellt, wenn der Elektromotor 10 mit dem Versorgungsspannungssignal 16 gemäß Fig. 2a angesteuert wird. Zu den Kommutierungszeitpunkten 24 bilden sich im Ankerstromsignal 22 Stromrippel 26 aus, die zu Verschleiß und Störungen führen, was erfindungsgemäß vermieden werden soll.

Zu diesem Zweck wird erfindungsgemäß das die Pulsfolge aufweisende Versorgungsspannungssignal 16 weiter moduliert, und zwar mittels eines Modulationssignals 28, das durch einen Modulator 30 erzeugt wird. Gemäß Fig. 2c handelt es sich in diesem Ausführungsbeispiel bei dem Modulationssignal 28 um ein Sinussignal, dessen Amplitude 32 im Wesentlichen die gleiche Größe aufweist wie der Gleichspannungsanteil 34 der Versorgungsspannung U. Die Lage und Frequenz des Modulationssignals 28 sind nun derart gewählt, dass die Minima des Sinussignals (Modulationssignal 28) jeweils in Phase mit den Kommutierungszeitpunkten 24 liegen. Durch diese Modulation des Versorgungsspannungssignals 16 ändert sich dessen Gleichspannungsanteil 34 nicht, wohl aber die Größe der Versorgungsspannung U zu den Kommutierungszeitpunkten 24, und zwar hier exemplarisch auf Null Volt.

Die Ermittlung der Kommutierungszeitpunkte 24 erfolgt in diesem Ausführungsbeispiel gemäß Blockschaltdiagramm nach Fig. 1 durch einen Sensor 36, dessen Ausgangssignal 38 einer Steuereinheit 40 in Form beispielsweise eines Mikrocontroller zugeführt wird, der wiederum ein Ausgangssignal 42 an den Modulator 30 ausgibt. Alternativ ist es auch möglich, dass das Ausgangssignal 38 des Sensors 36, bei dem es sich typischerweise um einen Hall Sensor handelt, direkt dem Modulator 30 zugeführt wird. Eine Auswerte-Recheneinheit wie beispielsweise ein Mikrocontroller, kann erforderlich sein, wenn die Kommutierungszeitpunkte 24 sensorlos ermittelt werden. Die entsprechenden Technologien und Verfahren für die sensorlose Ermittlung der Kommutierungszeitpunkte 24 eines Elektromotors sind grundsätzlich bekannt und sollen hier nicht weiter ausgeführt werden.

Das Ergebnis der Modulation des Versorgungsspannungssignals ist beispielhaft angedeutet in Fig. 2d. Der zeitliche Verlauf der Versorgungsspannung U wechselt demzufolge zwischen im Wesentlichen Null Volt zu den Kommutierungszeitpunkten 24 und dem doppelten Gleichspannungsanteil 34 in der Mitte der Intervalle zwischen zwei aufeinanderfolgenden Kommutierungszeitpunkten 24, wie in Fig. 2e gezeigt, so dass der Gleichspannungsanteil 34 im Mittel unverändert bleibt gegenüber der anhand von Fig. 2a beschriebenen Situation.

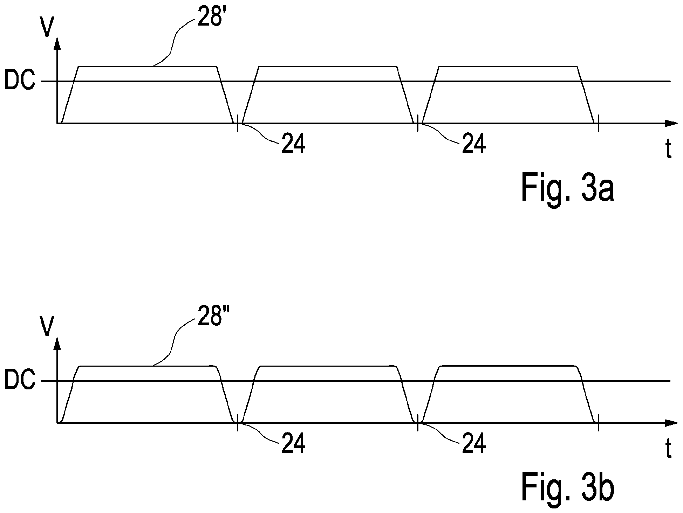

In den Fign. 3a und 3b sind zwei weitere Beispiele angegeben, in denen der Verlauf alternativer Modulationssignale 28' und 28" gezeigt ist.

### BEZUGSZEICHENLISTE

- 10: Elektromotor
- 12: Kommutator
- 14: Bürsten
- 16: Versorgungsspannungssignal
- 18: PWM-Generator
- 20: Pulse des Versorgungsspannungssignals
- 22: Ankerstromsignal
- 24: Kommutierungszeitpunkte
- 26: Stromrippel im Ankerstromsignal
- 28: Modulationssignal
- 28': Modulationssignal
- 28": Modulationssignal
- 30: Modulator
- 32: Amplitude des Modulationssignals
- 34: Gleichspannungsanteil
- 36: Sensor
- 38: Ausgangssignal des Sensors
- 40: Steuereinheit
- 42: Ausgangssignal der Steuereinheit
- U: Versorgungsspannung

## Patentansprüche

1. Verfahren zur Ansteuerung eines einen mechanischen Kommutator (12) aufweisenden Elektromotors (10), wobei bei dem Verfahren
- mittels eines Sensors (36) oder sensorlos diejenigen Zeitpunkte ermittelt werden, zu denen eine Kommutierung erfolgt,
- der Elektromotor (10) mittels eines eine Folge von Pulsen aufweisenden Versorgungsspannungssignals (16) angesteuert wird , **dadurch gekennzeichnet, dass**
- das Versorgungsspannungssignal (16) zur Reduktion seiner Größe zu den Kommutierungszeitpunkten (24) mittels eines Modulationssignals (28) moduliert wird, welches derart in Phase mit den Kommutierungszeitpunkten liegt, dass die Minima des Modulationssignals zeitlich mit den Kommutierungszeitpunkten zusammenfallen.

2. Verfahren nach Anspruch 1, **dadurch gekennzeichnet, dass** im Falle der Ermittlung der Kommutierungszeitpunkte (24) mittels eines Sensors (36) ein Hall Sensor verwendet wird und dass im Falle der sensorlosen Ermittlung der Kommutierungszeitpunkte (24) diese durch eine Analyse des Ankerstromsignals (22) ermittelt werden.

3. Verfahren nach Anspruch 1 oder 2, **dadurch gekennzeichnet, dass** das Versorgungsspannungssignal (16) pulsweitenmoduliert oder pulsdichtemoduliert ist und dass die Pulsweite bzw. Pulsdichte zur Reduktion der Größe des Versorgungsspannungssignals (16) zu den Kommutierungszeitpunkten (24) mittels des Modulationssignals (28) moduliert wird.

4. Verfahren nach einem der Ansprüche 1 bis 3, **dadurch gekennzeichnet, dass** die Größe des Versorgungsspannungssignals (16) zu den Kommutierungszeitpunkten (24) mittels des Modulationssignals (28) auf im Wesentlichen Null Volt reduziert wird.

5. Verfahren nach einem der Ansprüche 1 bis 4, **dadurch gekennzeichnet, dass** der Elektromotor (10) ein Gleichstrommotor ist, dass die Pulsweite des die Folge von Pulsen aufweisenden Versorgungspannungssignals (16) einen Konstantanteil (34) aufweist und dass das Modulationssignal (28) der Pulsweite ein Sinussignal ist, dessen Amplitude (32) im Wesentlichen gleich dem Konstantanteil (34) der Pulsweite des Versorgungsspannungssignals (16) ist und zu den Kommutierungszeitpunkten (24) jeweils einen Minimalwert annimmt.

## Claims

1. A method for controlling an electric motor (10) comprising a mechanical commutator (12), in which method
- the points in time at which commutation takes place are determined by means of a sensor (36) or without a sensor,
- the electric motor (10) is controlled by means of a supply voltage signal (16) having a sequence of pulses,
**characterized in that**
- the supply voltage signal (16) is modulated by means of a modulation signal (28) to reduce its magnitude at the commutation points in time (24), which modulation signal is in phase with the commutation points of time such that the minima of the modulation signal coincide with the commutation points in time.

2. The method according to claim 1, **characterized in that**, when the commutation points in time (24) are determined by means of a sensor (36), a Hall sensor is used, and **in that**, when the commutation points in time (24) are determined without a sensor, the commutation points in time are determined by an analysis of the rotor current signal (22).

3. The method according to claim 1 or 2, **characterized in that** the supply voltage signal (16) is pulse-width modulated or pulse-density modulated, and **in that** the pulse width and the pulse density, respectively, is modulated for reducing the magnitude of the supply voltage signal (16) at the commutation points in time (24) by means of the modulation signal (28).

4. The method according to any one of claims 1 to 3, **characterized in that** the magnitude of the supply voltage signal (16) at the commutation points in time (24) is reduced by means of the modulation signal (28) to substantially zero volts.

5. The method according to any one of claims 1 to 4, **characterized in that** the electric motor (10) is a DC motor, **in that** the pulse width of the supply voltage signal (16) having the sequence of pulses has a constant component (34), and **in that** the modulation signal (28) of the pulse width is a sinusoidal signal whose amplitude (32) is substantially equal to the constant component (34) of the pulse width of the supply voltage signal (16) and respectively assumes a minimum value at the commutation points in time (24).

## Revendications

1. Procédé de commande d'un moteur électrique (10) comportant un commutateur mécanique (12), dans lequel lors du procédé
- les instants auxquels une commutation s'effectue sont déterminés au moyen d'un capteur (36) ou sans capteur,
- le moteur électrique (10) est commandé au moyen d'un signal de tension d'alimentation (16) comportant une série d'impulsions, **caractérisé en ce que**
- afin de réduire sa valeur aux instants de commutation (24), le signal de tension d'alimentation (16) est modulé au moyen d'un signal de modulation (28), lequel est en phase avec les instants de commutation de telle sorte que les minima du signal de modulation coïncident chronologiquement avec les instants de commutation.

2. Procédé selon la revendication 1, **caractérisé en ce que** dans le cas de la détermination des instants de commutation (24) au moyen d'un capteur (36), un capteur à effet Hall est utilisé et **en ce que** dans le cas de la détermination sans capteur des instants de commutation (24) ceux-ci sont déterminés par analyse du signal d'intensité dans l'armature (22).

3. Procédé selon la revendication 1 ou 2, **caractérisé en ce que** le signal de tension d'alimentation (16) est modulé en largeur d'impulsion ou modulé en densité d'impulsion et **en ce que** la largeur d'impulsion ou la densité d'impulsion est modulée au moyen du signal de modulation (28) afin de réduire la valeur du signal de tension d'alimentation (16) aux instants de commutation (24) .

4. Procédé selon l'une des revendications 1 à 3, **caractérisé en ce que** la valeur du signal de tension d'alimentation (16) est sensiblement réduite à zéro volt aux instants de commutation (24) au moyen du signal de modulation (28).

5. Procédé selon l'une des revendications 1 à 4, **caractérisé en ce que** le moteur électrique (10) est un moteur à courant continu, **en ce que** la largeur d'impulsion du signal de tension d'alimentation (16) comportant la série d'impulsions comporte une composante constante (34) et **en ce que** le signal de modulation (28) de la largeur d'impulsion est un signal sinusoïdal dont l'amplitude (32) est sensiblement égale à la composante constante (34) de la largeur d'impulsion du signal de tension d'alimentation (16) et adopte une valeur minimale à chaque instant de commutation (24).
